# EUROPÄISCHE PATENTANMELDUNG

(11) **EP 4 794 178 A1**
(43) Veröffentlichungstag der Anmeldung: **19.08.2026**
(21) Anmeldenummer: 26155452.1
(22) Anmeldetag: 30.01.2026
(51) Int. Cl.: H02K 15/023, B22D 17/22, B22D 19/00

(54) **DRUCKGUSSWERKZEUG UND VERFAHREN ZUR HERSTELLUNG EINES ROTORS FÜR EINEN ASYNCHRONMOTOR**

(30) Priorität: 14.02.2025 DE 102025105689
(71) Anmelder: Volkswagen Aktiengesellschaft, 38440 Wolfsburg (DE)
(72) Erfinder: Warnke, Oliver, 38440 Wolfsburg (DE); Mäuser, Florian, 38440 Wolfsburg (DE); Goeke, Stephan, 38440 Wolfsburg (DE)

(57) **Zusammenfassung**

Es wird ein Druckgusswerkzeug (1) und ein Verfahren zur Herstellung eines Rotors (2) für einen Asynchronmotor beschrieben. Das Druckgusswerkzeug (1) weist dabei eine Kavität (4), die zur Aufnahme von Metallschmelze und eines ringartigen Rotorblechpakets (6) als Einlegeteil ausgebildet ist, wobei die Kavität (4) bezogen auf eine Rotationsachse (A) des Rotorblechpakets (6) ein erstes Axialende (14) und ein diesem in Axialrichtung entgegengesetztes zweites Axialende (16) aufweist, und einen an dem ersten Axialende (14) in die Kavität (4) mündenden Anguss (20) auf. Des Weiteren weist das Druckgusswerkzeug (1) einen dem ersten Axialende (14) zugeordneten ersten Kavitätsringbereich (18) zur Ausbildung eines ersten Kurzschlussrings (22) am Rotorblechpaket (6) und einen im bestimmungsgemäßen Nutzungszustand dem ersten Kavitätsringbereich (18) über das Rotorblechpaket (6) gegenüberliegenden und dem zweiten Axialende (16) zugeordneten zweiten Kavitätsringbereich (24) zur Ausbildung eines zweiten Kurzschlussrings (28), und einen Pressstempel (32) auf, der am zweiten Axialende (16) der Kavität (4) angeordnet ist und in Axialrichtung in den zweiten Kavitätsringbereich (24) verschiebbar gelagert ist.

## Beschreibung

Die Erfindung betrifft ein Druckgusswerkzeug zur Herstellung (wenigstens) eines Rotors für einen Asynchronmotor. Des Weiteren betrifft die Erfindung ein Verfahren zur Herstellung eines solchen Rotors.

Elektromotoren in Form von Asynchronmotoren haben gewisse Vorteile gegenüber Synchronmotoren. So können Asynchronmotoren bspw. ein vergleichsweise hohes Gegenmoment beim Anlaufen überwinden, was sie bei Arbeitsmaschinen vergleichsweise attraktiv macht. Außerdem sind sie vergleichsweise günstig herstellbar. Im Vergleich zu Synchronmotoren benötigen sie - insbesondere in der Bauform mit einem sogenannten Kurzschlussläufer - keine Schleifringe und/oder Bürsten zur Kommutation und können somit auch in explosionsgefährdeten Bereichen vergleichsweise einfach und sicher betrieben werden.

Eine verbreitete Bauform ist dabei die erwähnte Ausbildung des Rotors ("Läufers") als sogenannter Kurzschlussläufer, auch Käfig-Kurzschlussläufer. "Wicklungen" des Rotors sind hierbei meist durch elektrisch leitfähige Metallstäbe gebildet, die in Nuten eines Rotorblechpakets einliegen und an beiden Stirnseiten des Rotorblechpakets mit sogenannten Kurzschlussringen untereinander kurzgeschlossen sind. Diese "Stäbe" (ohne Rotorblechpaket wirken diese Stäbe wie Gitterstäbe eines Käfigs oder auch wie ein Hamsterlaufrad) sind häufig in die Nuten des Rotorblechpakets eingegossen. Meist wird in einem Gießverfahren dabei auch der jeweilige Kurzschlussring mit angegossen. Dies stellt eine vergleichsweise wirtschaftliche Fertigung dar.

Zur Ausbildung der Stäbe und Kurzschlussringe sind erkanntermaßen Metalle mit geringer Dichte aber auch hoher elektrischer Leitfähigkeit interessant. Neben Kupfer und Zink sowie deren Legierungen kommen aus diesem Grund auch Reinaluminium (zumindest Al99,7) und Aluminiumlegierungen zum Einsatz. Insbesondere Reinaluminium neigt jedoch zu starker Erstarrungsschwindung und Erstarrungsporosität beim Gießen.

Der Erfindung liegt die Aufgabe zugrunde, die Herstellung eines verbesserten Rotors für einen Asynchronmotor zu ermöglichen.

Diese Aufgabe wird erfindungsgemäß gelöst durch ein Druckgusswerkzeug mit den Merkmalen des Anspruchs. Des Weiteren wird diese Aufgabe erfindungsgemäß gelöst durch ein Verfahren mit den Merkmalen des Anspruchs 12. Weitere vorteilhafte und teils für sich erfinderische Ausführungsformen und Weiterentwicklungen der Erfindung sind in den Unteransprüchen und der nachfolgenden Beschreibung dargelegt.

Das erfindungsgemäße Druckgusswerkzeug ist zur Herstellung (insbesondere wenigstens) eines Rotors für einen Asynchronmotor eingerichtet und vorgesehen. Dazu weist das Druckgusswerkzeug (insbesondere wenigstens) eine Kavität auf, die zur Aufnahme von Metallschmelze und eines ringartigen Rotorblechpakets als Einlegeteil ausgebildet ist. Die Kavität weist hierbei bezogen auf eine Rotationsachse des Rotorblechpakets ein erstes Axialende und ein diesem in Axialrichtung (also entlang der Rotationsachse) entgegengesetztes zweites Axialende auf. Das Druckgusswerkzeug weist des Weiteren einen an dem ersten Axialende in die Kavität mündenden Anguss auf. Außerdem weist das Druckgusswerkzeug, insbesondere die Kavität, einen dem ersten Axialende zugeordneten ersten Kavitätsringbereich zur Ausbildung eines ersten Kurzschlussrings am Rotorblechpaket und einen im bestimmungsgemäßen Nutzungszustand dem ersten Kavitätsringbereich über das Rotorblechpaket gegenüberliegenden und dem zweiten Axialende zugeordneten zweiten Kavitätsringbereich zur Ausbildung eines zweiten Kurzschlussrings auf. Ferner weist das Druckgusswerkzeug einen Pressstempel auf, der am zweiten Axialende der Kavität angeordnet ist und in Axialrichtung in den zweiten Kavitätsringbereich verschiebbar gelagert ist.

Vorzugsweise weist das Druckgusswerkzeug (zumindest) zwei "Werkzeughälften" auf, die entlang einer - optional dreidimensional ausgebildeten, bspw. gewölbten und/oder Stufen aufweisenden - Formtrennfläche (die insbesondere in einer Formtrennebene liegt oder auch als solche bezeichnet wird) reversibel aneinander anlegbar sind. Optional kann das Druckgusswerkzeug aber auch mehr, bspw. drei "Werkzeughälften" aufweisen, die eine Entformung besonders komplexer Außengeometrien ermöglichen. Die Kavität ist als Formgebungshohlraum dabei derart in die beiden (oder die mehreren) Werkzeughälften eingearbeitet, dass bei getrennten, also geöffneten, Werkzeughälften eine Entformung des in der Kavität ausgebildeten Gussstücks - hier also des Rotors - möglich ist. In Abhängigkeit von der dreidimensionalen Gestalt des Gussstücks kann es zusätzlich erforderlich sein, dass zusätzliche bewegliche Werkzeugelemente in einer oder beiden Werkzeughälften vorhanden sind, um z. B. Hinterschnitte des Gussstücks entformen zu können (mittels sogenannter Schieber, Pinolen oder dergleichen). Der Begriff "Werkzeughälfte" ist hierbei insbesondere unabhängig davon, ob eine "echte" (d. h. mathematische) Halbierung des Druckgusswerkzeugs vorliegt. Bezogen auf die Masse oder das Volumen kann die Aufteilung auf die beiden Werkzeughälften grundsätzlich beliebig sein und hängt vornehmlichen von einer zweckmäßigen Positionierung der Formtrennfläche durch die Kavität ab. Optional kann das Druckgusswerkzeug auch als Mehrkavitätenwerkzeug ausgebildet sein, das mithin mehrere Formgebungshohlräume zur parallelen Herstellung mehrerer, vorzugsweise gleichartiger, Rotoren eingerichtet und vorgesehen ist.

Das Druckgusswerkzeug stellt also insbesondere einen landläufig auch als Gieß- oder Gussform bezeichneten Gegenstand dar. Vorzugsweise kommt das Druckgusswerkzeug auf einer Gießmaschine, hier insbesondere einer Druckgießmaschine zum Einsatz. Eine solche Druckgießmaschine weist üblicherweise zwei parallel zueinander angeordnete Trägerplatten auf, an denen das Druckgusswerkzeug, insbesondere dessen beiden "Werkzeughälften", für einen bestimmungsgemäßen Gießprozess gehaltert ("gespannt") wird. Zumindest eine dieser Trägerplatten ist dabei - insbesondere geradlinig und normal zu den beiden Trägerplatten - verschiebbar, um das Druckgusswerkzeug "öffnen" und "schließen" zu können. Des Weiteren weist die Druckgießmaschine eine Schmelzefördereinrichtung, bspw. einen Zylinder und einen Kolben auf, um die Metallschmelze unter einem Fülldruck (mit gegenüber Umgebungsdruck erhöhten, variablem oder konstant vorgegebenen Fülldruckwert) durch den Anguss (oder ein diesen Anguss umfassendes Angusssystem) in die Kavität zu fördern. Druckguss oder Druckgießen grenzt sich hierdurch von einem "klassischen" Gießprozess ab, bei dem (Metall-) Schmelze lediglich unter Wirkung der Schwerkraft in die Kavität eingebracht (gegossen) wird und der auch als "Schwerkraftgießen" bezeichnet wird.

Das Druckgusswerkzeug ist insbesondere dazu eingerichtet und vorgesehen in einem auch als Pressgießen oder englisch "squeeze casting" bezeichneten Druckgießprozess zum Einsatz zu kommen. Hierbei wird zusätzlich zu dem bereits aufgrund des Druckgießprozesses vorliegenden, erhöhten Werts des Fülldrucks in der Kavität (auch als Werkzeuginnendruck bezeichnet) dieser Wert weiter erhöht, indem hier der Pressstempel in die Kavität verschoben wird. Hierdurch wird vorteilhafterweise eine bei Erstarrung der Schmelze auftretende Schwindung zumindest teilweise ausgeglichen und dadurch bedingte sowie aufgrund von Entgasung der Metallschmelze auftretende Makro- und Mikroporosität des Gussstücks (insbesondere aufgrund von Lunker- und/oder Gasblasenbildung) vermieden oder zumindest verringert. Dies fördert erkanntermaßen insbesondere die mechanischen Eigenschaften und/oder eine Form- und/oder Maßhaltigkeit (d. h. insbesondere Präzision der Abformung der Kavität) des Gussstücks.

Das erfindungsgemäße Verfahren dient zur Herstellung eines Rotors (insbesondere des vorstehend genannten Rotors) für einen (bzw. den) Asynchronmotor. Insbesondere nutzt das Verfahren das hier und im Folgenden beschriebene Druckgusswerkzeug. Letzteres wird dabei verfahrensgemäß zunächst bereitgestellt und (ist oder wird) vorzugsweise auf der genannten Druckgießmaschine montiert. Insbesondere bei geöffnetem Druckgusswerkzeug, wird anschließend ein (insbesondere das vorstehend genannte) ringartiges Rotorblechpaket als Einlegeteil in die Kavität des Druckgusswerkzeugs eingelegt. Vorzugsweise weist die Kavität entsprechende Konturen auf, an denen das Rotorblechpakte zumindest teilweise angelegt und/oder auch gehaltert wird. Vorzugsweise nach einem Schließen des Druckgusswerkzeugs, wird dann durch den Anguss von der ersten Axialseite her Metallschmelze in die Kavität derart eingebracht, dass der erste und der zweite Kavitätsringbereich mit Metallschmelze gefüllt werden. Hierzu wird vorzugsweise mittels der vorstehend genannten Schmelzefördereinrichtung eine vorbestimmte Menge an Metallschmelze (insbesondere unter dem vorstehend genannten Fülldruck) in die Kavität gefördert. Nach Füllung der Kavität wird der Pressstempel zum Aufbringen eines - insbesondere gegenüber dem durch die Füllung der Kavität bedingten Fülldruckwert - erhöhten Verdichtungsdruckwerts (des Werkzeuginnendrucks) gegen die Metallschmelze, insbesondere also gegen den durch die Metallschmelze auszubildenden zweiten Kurzschlussring, verfahren. Die Metallschmelze wird anschließend, insbesondere bei verfahrenem Pressstempel, auf eine Entformungstemperatur, konkret einen Entformungstemperaturwert, abgekühlt. Anschließen wird der das Rotorblechpaket und die durch die erstarrte Metallschmelze gebildeten Kurzschlussringe aufweisende Rotor aus der Kavität entformt.

Vorzugsweise wird die Entformungstemperatur an einer Wandung der Kavität und somit mit vergleichsweise geringem Abstand zur Metallschmelze bzw. zum erstarrten Gussstück gemessen. Alternativ kann die Entformungstemperatur, insbesondere eine Dauer (Abkühlzeit) seit Start eines Einspritzvorgangs und einem Erreichen eines beabsichtigten Werts der Entformungstemperatur, auch empirisch bestimmt werden.

Optional wird der Pressstempel kraft- oder druckgeregelt verschoben. Insbesondere wird in diesem Fall während der Abkühlzeit der Pressstempel weiter in die Kavität verfahren, da die abkühlende und/oder erstarrende Metallschmelze schwindet und somit bei nicht nachbewegtem Pressstempel der Verdichtungsdruckwert abnehmen würde. Alternativ kann der Pressstempel aber auch bis zum Erreichen des beabsichtigten Verdichtungsdruckwerts in die Kavität verschoben und anschließend ortsfest gehalten werden.

Als Metalle für die Metallschmelze werden insbesondere Aluminium, insbesondere Reinaluminium, aber auch Kupfer oder Zink, sowie deren Legierungen, herangezogen. Diese Metalle und Legierungen weisen hierbei eine besonders hohe elektrische Leitfähigkeit auf, so dass diese sich besonders für einen Kurzschlussläufer eignen.

Gemäß einer zweckmäßigen Verfahrensvariante wird nach der Füllung der Kavität und dem Aufbringen des erhöhten Verdichtungsdruckwerts eine Verzögerungszeit abgewartet. Diese Verzögerungszeit beträgt insbesondere ein bis zehn Sekunden, vorzugsweise zwei bis fünf Sekunden. Während dieser Zeit kann sich die Metallschmelze "beruhigen" und/oder auf einen gegenüber einem zur Formfüllung genutzten Temperaturwert geringeren Temperaturwert abkühlen. Vorzugsweise nach Ablauf der Verzögerungszeit (oder auch alternativ) wird der erhöhte Verdichtungsdruckwert insbesondere für eine Dauer ("Presszeit") von 0,1 bis 1,5, vorzugsweise bis 1,0, Sekunden aufgebracht. Weiter alternativ oder vorzugsweise zusätzlich werden für den Verdichtungsdruckwert in der Kavität insbesondere Werte von 400 bis 700 bar, insbesondere von etwa 500 bis 600 (+/- 20) bar, gewählt. Hierzu wird der Pressstempel - insbesondere im Fall einer hydraulischen Betätigung - beispielsweise mit einem Hydraulikdruck von 100 bis 1.000 bar, vorzugsweise von 400 bis 500 bar verschoben.

Gemäß einer bevorzugten Ausführung ist der Pressstempel ringförmig, insbesondere ringförmig geschlossen, ausgebildet. Dadurch wird eine vollumfängliche Druckbeaufschlagung des Kurzschlussrings ermöglicht. Eine solche vollumfängliche Druckbeaufschlagung ermöglicht auch eine insbesondere besonders homogene Verteilung der (materialbedingten) Eigenschaften des Kurzschlussrings.

Gemäß einer bevorzugten Weiterbildung ist der Pressstempel nicht nur ringförmig (geschlossen), sondern auch flächengleich zur einer zum zweiten Axialende weisenden Stirnfläche des durch die Metallschmelze gebildeten (zweiten) Kurzschlussrings ausgebildet. Anders ausgedrückt drückt der Pressstempel auf die gesamte Stirnfläche des zweiten Kurzschlussrings. Dadurch kann der zweite Kurzschlussring besonders präzise abgeformt werden.

Vorzugsweise stehen der erste und der zweiten Kavitätsringbereich im bestimmungsgemäßen Einsatzzustand mit eingelegtem Rotorblechpaket über Nuten im Rotorblechpaket, die zur Ausbildung von, eine Rotorwicklung bildenden Stäben dienen, in fluidischer Verbindung. Anders ausgedrückt strömt die Metallschmelze durch diese Nuten von dem ersten zu dem zweiten Kavitätsringbereich. Bei Applikation des Verdichtungsdruckwerts auf den zweiten Kavitätsringbereich wird dieser Verdichtungsdruckwert somit hydraulisch durch die Metallschmelze auch in den ersten Kavitätsringbereich übertragen, sofern die Nuten und der erste Kavitätsringbereich noch mit flüssiger Metallschmelze gefüllt sind. Dadurch wird auch der erste Kavitätsringbereich und auch die Stäbe dem Verdichtungsdruckwert unterworfen und somit vorteilhafterweise verdichtet.

Gemäß einer zweckmäßigen Ausführung weist das Druckgusswerkzeug einen Stempelantrieb zur Verschiebung (Betätigung) des Pressstempels auf. Beispielsweise handelt es sich bei diesem Stempelantrieb wie vorstehend beschrieben um eine hydraulische Betätigung, genauer um einen Hydraulikzylinder, oder um einen Elektromotor mit einem Getriebe, der bzw. das auf den Pressstempel wirkt, um diesen im bestimmungsgemäßen Betrieb in die Kavität, genauer in den zweiten Kavitätsringbereich oder aus diesem heraus zu bewegen.

Für den Fall, dass das Druckgusswerkzeug den Stempelantrieb aufweist, ist diesem optional auch ein Controller zur Steuerung des Stempelantriebs zugeordnet. Beispielsweise ist dieser Controller in den Stempelantrieb integriert oder alternativ in einen separaten Schaltschrank eingebaut und mit dem Stempelantrieb steuerungstechnisch verbunden. Alternativ kann der Controller aber auch in eine Steuerung, also einen übergeordneten Controller, der Druckgießmaschine integriert sein.

In alternativer Ausgestaltung weist der Pressstempel Mittel zur kraftübertragungstechnischen Kopplung eines Antriebs einer Druckgussmaschine auf. Ein solcher Antrieb kann bspw. ein Antrieb für einen Auswerfer oder für eine der Trägerplatten selbst sein.

Gemäß einer besonders zweckmäßigen Ausführung ist der zweite Kavitätsringbereich in Axialrichtung in einen Formgebungsbereich für den zweiten Kurzschlussring und in einen Schmelzereservoirbereich unterteilt. Dieser Schmelzereservoirbereich schließt dabei insbesondere auf der von Rotorblechpaket abgewandten Seite, also außenseitig, an den Kavitätsringbereich an. Außerdem wird in dem Schmelzereservoirbereich im bestimmungsgemäßen Betrieb des Druckgusswerkzeugs vor einem Verdichtungshub des Pressstempels Metallschmelze vorgehalten. Anders ausgedrückt kann in dem Schmelzereservoirbereich eine Menge Metallschmelze zwischengespeichert werden, die für die nachfolgende Verdichtung erforderlich ist oder genutzt werden kann.

Gemäß einer weiteren zweckmäßigen Ausführung schließt im bestimmungsgemäßen Einsatzzustand das Rotorblechpaket axial unmittelbar an den ersten Kavitätsringbereich an. Der zweite Kavitätsringbereich schließt gleichermaßen unmittelbar axial an das Rotorblechpaket an. Die zwei Kavitätsringbereiche stehen dabei, wie vorstehend beschrieben, vorzugsweise durch die in dem Rotorblechpaket eingeformten Nuten fluidisch in Verbindung. Die Metallschmelze kann somit von dem ersten Kavitätsringbereich durch die Nuten in den zweiten Kavitätsringbereich strömen.

Gemäß einer optionalen Ausführung dient der Pressstempel nicht nur zur Verdichtung der Metallschmelze sondern auch als Auswerfer für den aus dem Rotorblechpaket und der Metallschmelze gebildeten Rotor. Dies stellt mithin eine Bauteilintegration dar, die auch einer Einsparung sowohl von Bauteilen aber auch von Bauraum dienen kann. Hierfür ist der Pressstempel nach dem Öffnen des Druckgusswerkzeugs noch weiter in Verdichtungsrichtung verschoben werden.

Gemäß einer alternativen Ausgestaltung weist das Druckgusswerkzeug einen (insbesondere von dem Presstempel separaten) Auswerfer auf. Dieser ist dabei parallel (und insbesondere auch in die gleiche Richtung) zu dem Pressstempel (sowie vorzugsweise unabhängig von diesem) verschiebbar. Zweckmäßigerweise ist der Auswerfer dabei radial innerhalb des Pressstempels angeordnet und zur Kraftausübung auf das Rotorblechpaket eingerichtet. Der Auswerfern kann dabei ein einzelner, insbesondere "klassischer" Auswerferstift (auch: Auswerferstange) oder aber auch ein verschiebbares (insbesondere im Vergleich zu dem Auswerferstift) großflächigeres Element der Kavitätswand (bspw. ein Schieber oder dergleichen) sein. Der Auswerfer kann weiter alternativ auch eine Mehrzahl von einzelnen Auswerferstiften aufweisen, die durch den Pressstempel hindurch verschiebbar angeordnet sind und zur Kraftausübung auf den zweiten Kurzschlussring eingerichtet sind.

Gemäß einer zweckmäßigen Ausführung weist das Druckgusswerkzeug eine variotherme Temperierung auf. Hierunter wird verstanden, dass das Druckgusswerkzeug, insbesondere dessen Kavität im Zuge eines Gießzyklus auf unterschiedliche Temperaturwerte temperiert (gebracht) werden kann. Für den Fall, dass zumindest zwei unterschiedliche Temperaturwerte eingestellt werden sollen, weist das Druckgusswerkzeug hierzu zwei voneinander getrennte Kühlkanalsysteme in einer Werkzeughälfte auf. Hier können dann zwei Temperiersysteme (bspw. ein Fluidtemperiersystem, konkret Fluidheizungen mit z. B. einem Temperieröl als Wärmeträger) angeschlossen werden, die mittels Ventilen zu unterschiedlichen Zeitpunkten zu- oder abgeschaltet werden. Eine solche variotherme Temperierung ermöglicht bspw. ein Einbringen der Metallschmelze bei einem hohen Werkzeugtemperaturwert, um insbesondere ein - zumindest zu schnelles - Erstarren bereits während der Formfüllung zu vermeiden. Nach der Formfüllung kann dann auf den niedrigeren Temperaturwert umgeschalten werden, um die Erstarrung der Metallschmelze zu ermöglichen oder zu beschleunigen.

Die Konjunktion "und/oder" ist hier und im Folgenden insbesondere derart zu verstehen, dass die mittels dieser Konjunktion verknüpften Merkmale sowohl gemeinsam als auch als Alternativen zueinander ausgebildet sein können.

Nachfolgend werden Ausführungsbeispiele der Erfindung anhand einer Zeichnung näher erläutert. Darin zeigen in schematischen und beispielhaften Darstellungen:
- Fig. 1: in einer Teilschnittdarstellung ein Druckgusswerkzeug für die Herstellung eines Rotors eines Asynchronmotors mit einem Rotorblechpaket als Einlegeteil,
- Fig. 2: in Ansicht gemäß Fig. 1 das Druckgusswerkzeug in einem nachfolgenden Verfahrensschritt,
- Fig. 3: in Ansicht gemäß Fig. 1 das Druckgusswerkzeug in einem weiteren nachfolgenden Verfahrensschritt,
- Fig. 4: in Ansicht gemäß Fig. 1 das Druckgusswerkzeug gemäß einem weiteren Ausführungsbeispiel in Verfahrensschritt gemäß Fig. 3, und
- Fig. 5: in einem Ablaufdiagram ein Verfahren zu Herstellung des Rotors.

Einander entsprechende Teile sind in allen Figuren stets mit gleichen Bezugszeichen versehen.

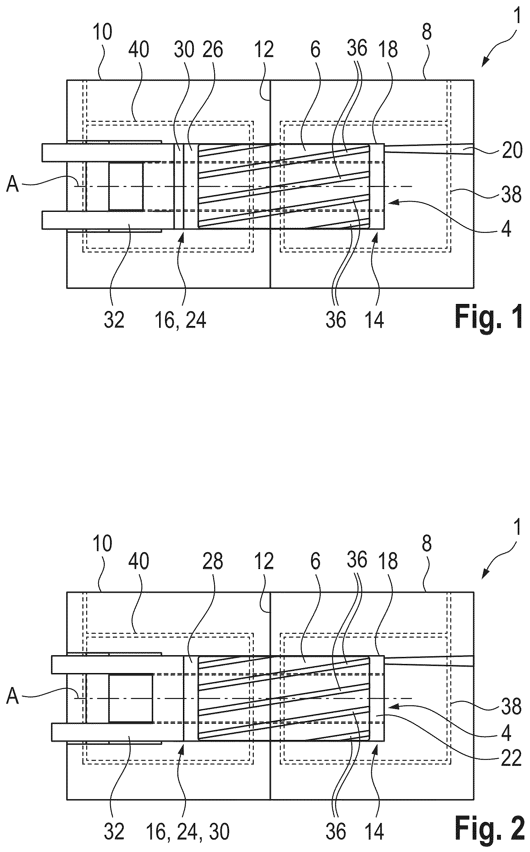

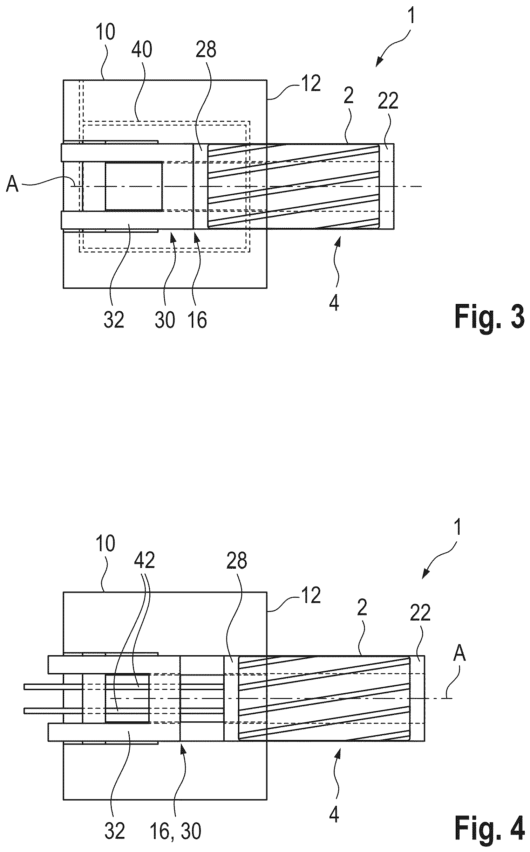

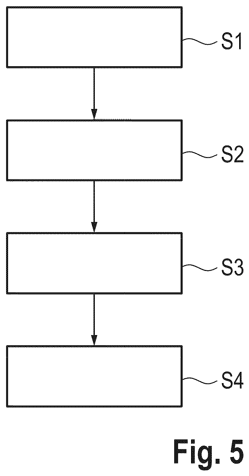

In Fig. 1 ist ein Druckgusswerkzeug 1 schematisch in einer Teilschnittdarstellung gezeigt. Das Druckgusswerkzeug 1 kommt in einem in Fig. 5 anhand eines schematischen Ablaufdiagramms beschriebenen Verfahrens zur Herstellung eines Rotors 2 (s. Fig. 3) für einen Asynchronmotor zum Einsatz.

Das Druckgusswerkzeug 1 weist eine Kavität 4 (d. h. einen Formhohlraum) auf, die neben der Aufnahme von Metallschmelze auch zur Aufnahme eines Rotorblechpakets 6 für den Rotor 2 ausgebildet ist. Die Kavität 4 ist dabei zu einem Teil in einer ersten Werkzeughälfte 8 und zu einem weiteren Teil in einer zweiten Werkzeughälfte 10 des Druckgusswerkzeugs 1 ausgebildet. Die beiden Werkzeughälften 8 und 10 sind an einer Formtrennebene 12 (hier auch eine Formtrennfläche) reversibel zusammensetzbar. Im bestimmungsgemäßen Einsatzzustand ist das Druckgusswerkzeug 1 auf einer Druckgießmaschine (nicht dargestellt) montiert. Die erste Werkzeughälfte 8 ist dabei auf einer Trägerplatte des Druckgießmaschine angeordnet, die einer Angussseite zugeordnet ist, die zweite Werkzeughälfte 10 auf einer Trägerplatte, die gegenüber der angussseitigen Trägerplatte beweglich gelagert und mittels eines Schließmechanismus der Druckgießmaschine zwischen einer Offenstellung einer Schließstellung verschiebbar ist.

Die Kavität 4 ist derart ausgestaltet, dass das Rotorblechpaket 6 mit einer Rotationsachse A senkrecht zur Formtrennebene 12 ausgerichtet ist. Die Kavität 4 erstreckt sich mithin in Axialrichtung (in Bezug auf die Rotationsachse A) in den beiden Werkzeughälften 8 und 10. Ein erstes Axialende 14 der Kavität 4 ist dabei in der ersten Werkzeughälfte 8 und ein zweites, dem ersten Axialende 14 entlang der Rotationsachse A gegenüberliegendes Axialende 16 in der zweiten Werkzeughälfte 10 angeordnet.

Am ersten Axialende 14 befindet sich ein erster Kavitätsringbereich 18 der Kavität 4. In diesen mündet ein Anguss 20 für die Metallschmelze. Der erste Kavitätsringbereich 18 liegt angussseitig vor dem eingelegten Rotorblechpaket 6 und dient zur Formgebung eines ersten Kurzschlussrings 22 des Rotors 2 (s. Fig. 2, 3), der an das Rotorblechpaket 6 end- und stirnseitig angeformt wird.

Am zweiten Axialende 16 befindet sich ein zweiter Kavitätsringbereich 24, der auf einer dem Anguss 20 abgewandten Seite des Rotorblechpakets 6 (wenn dieses in die Kavität 4 eingelegt ist) angeordnet ist. Der zweite Kavitätsringbereich 24 ist dabei unterteilt in einen Formgebungsbereich 26, der zur Ausbildung eines zweiten, dem ersten Kurzschlussring 22 über das Rotorblechpaket 6 gegenüberliegenden und an das Rotorblechpaket 6 stirnseitig angeformten Kurzschlussrings 28 ausgebildet ist, und in einen Schmelzereservoirbereich 30.

Am zweiten Axialende 16 der Kavität 4 ist außerdem ein Pressstempel 32 des Druckgusswerkzeugs 1 angeordnet, der beweglich gelagert und mittel eines Stempelantriebs der Druckgießmaschine - bspw. einer Auswerferplatte oder dergleichen - in die Kavität 4, genauer in den Schmelzereservoirbereich 30 verschiebbar ist. Der Pressstempel 32 ist ringförmig ausgestaltet, so dass ein Druck auf eine Stirnfläche des zweiten Kurzschlussrings 28, genauer auf die diesen nach der Erstarrung bildenden Metallschmelze ausgeübt werden kann.

Zur Herstellung des Rotors 2 wird nun in einem ersten Verfahrensschritt S1 (s. Fig. 5) das (auf der Druckgießmaschine montierte) Druckgusswerkzeug 1 geöffnet und das Rotorblechpaket 6 in die Kavität 4 eingelegt. Anschließend wird das Druckgusswerkzeug 1 wieder geschlossen. Das Rotorblechplaket 6 liegt dabei zwischen den beiden Kavitätsringbereichen 18 und 24 ein.

In einem zweiten Verfahrensschritt S2 wird durch den Anguss 20 Metallschmelze in die Kavität 20 eingebracht. Die Metallschmelze füllt den ersten Kavitätsringbereich 18, fließt durch Nuten 36 in einer Mantelfläche des Rotorblechpakets 6 in den zweiten Kavitätsringbereich 24 und füllt diesen. Das Druckgusswerkzeug 1 wird hierbei mittels einer variothermen Temperierung, für die beispielhaft in der ersten Werkzeughälfte 8 ein erster Temperierkreis 38 und in der zweiten Werkzeughälfte 10 ein zweiter Temperierkreis 40 dargestellt sind, auf einen ersten Werkzeugtemperaturwert temperiert, der im Bereich der Erstarrungstemperatur der Metallschmelze - hier Reinaluminium - bei 660 °C (+/- 30 °C) liegt. Dadurch wird ein Erstarren der Metallschmelze während der Formfüllung verhindert oder zumindest verzögert.

Nach dem Einbringen der Metallschmelze, konkret nach der vollständigen Formfüllung, wird das Druckgusswerkzeug 1 in einem dritten Verfahrensschritt S3 auf einen niedrigeren Temperaturwert (bspw. 150 °C) gekühlt und dabei der Pressstempel 32 in den Schmelzereservoirbereich 30 verschoben. Dabei wird der Pressstempel 32 kraftgeregelt (oder im Fall eines hydraulischen Stempelantriebs druckgeregelt) verschoben, so dass ein vorgegebener Verdichtungsdruckwert auf die Metallschmelze wirkt (s. Fig. 2). Aufgrund der zunächst (sofern die Metallschmelze in den Nuten 36 noch nicht erstarrt ist) fluidischen Verbindung zwischen den beiden Kavitätsringbereichen 24 und 18 durch die Nuten 36 überträgt sich dieser Verdichtungsdruckwert auf alle miteinander in Verbindung stehenden schmelzeförmigen Bereiche innerhalb der Kavität. Durch den Verdichtungsdruckwert kann eine Schwindungsporosität und auch eine Blasenbildung aufgrund von Ausgasung gelöster Gase vermieden oder verringert werden.

Ist der Rotor 2 - d. h. die Metallschmelze um das Rotorblechpaket 6 - hinreichend abgekühlt, wird das Druckgusswerkzeug 1 in einem vierten Verfahrensschritt S4 geöffnet und der Rotor 2 entformt. Hierzu wird gemäß Fig. 3 der Pressstempel 32 weiter durch die Kavität 4 bewegt und stößt den Rotor 2 mithin aus der Kavität 4. Die nun mit Aluminium gefüllten Nuten 36 bilden Wicklungen für den Rotor 2, die mittels der Kurzschlussringe 22 und 28 kontaktiert sind.

In Fig. 4 ist eine alternative Ausführung dargestellt. Das Druckgusswerkzeug 1 weist hierbei einen Auswerfer mit zusätzlichen, d. h. von dem Pressstempel 32 unabhängig verfahrbaren, Auswerferstangen 42 (auch: Auswerferstifte) auf, die durch den Pressstempel 32 hindurch auf den zweiten Kurzschlussring 28 wirken. Der Pressstempel 32 wird hier nur bis zu dem Formgebungsbereich 26 des zweiten Kavitätsringbereichs 24 bewegt. Das Ausstoßen des Rotors 2 bei geöffnetem Druckgusswerkzeug 1 erfolgt mittels der Ausfwerferstangen 42, die hier noch weiter bewegt werden können.

Der Gegenstand der Erfindung ist nicht auf die vorstehend beschriebenen Ausführungsbeispiele beschränkt. Vielmehr können weitere Ausführungsformen der Erfindung von dem Fachmann aus der vorstehenden Beschreibung abgeleitet werden. Insbesondere können die anhand der verschiedenen Ausführungsbeispiele beschriebenen Einzelmerkmale der Erfindung und deren Ausgestaltungsvarianten auch in anderer Weise miteinander kombiniert werden. Beispielsweise kann das Druckgusswerkzeug 1 auch mehrere - vorzugsweise gleichartige - Kavitäten 4 aufweisen, um einen Durchsatz bei der Herstellung erhöhen zu können.

### Bezugszeichenliste

- 1: Druckgusswerkzeug
- 2: Rotor
- 4: Kavität
- 6: Rotorblechpaket
- 8: Werkzeughälfte
- 10: Werkzeughälfte
- 12: Formtrennebene
- 14: Axialende
- 16: Axialende
- 18: Kavitätsringbereich
- 20: Anguss
- 22: Kurzschlussring
- 24: Kavitätsringbereich
- 26: Formgebungsbereich
- 28: Kurzschlussring
- 30: Schmelzereservoirbereich
- 32: Pressstempel
- 36: Nut
- 38: Temperierkreis
- 40: Temperierkreis
- 42: Auswerferstange

- A: Rotationsachse
- S1-S4: Verfahrensschritt

## Patentansprüche

1. Druckgusswerkzeug (1) zur Herstellung eines Rotors (2) für einen Asynchronmotor, aufweisend
- eine Kavität (4), die zur Aufnahme von Metallschmelze und eines ringartigen Rotorblechpakets (6) als Einlegeteil ausgebildet ist, wobei die Kavität (4) bezogen auf eine Rotationsachse (A) des Rotorblechpakets (6) ein erstes Axialende (14) und ein diesem in Axialrichtung entgegengesetztes zweites Axialende (16) aufweist,
- einen an dem ersten Axialende (14) in die Kavität (4) mündenden Anguss (20),
- einen dem ersten Axialende (14) zugeordneten ersten Kavitätsringbereich (18) zur Ausbildung eines ersten Kurzschlussrings (22) am Rotorblechpaket (6) und einen im bestimmungsgemäßen Nutzungszustand dem ersten Kavitätsringbereich (18) über das Rotorblechpaket (6) gegenüberliegenden und dem zweiten Axialende (16) zugeordneten zweiten Kavitätsringbereich (24) zur Ausbildung eines zweiten Kurzschlussrings (28), und
- einen Pressstempel (32), der am zweiten Axialende (16) der Kavität (4) angeordnet ist und in Axialrichtung in den zweiten Kavitätsringbereich (24) verschiebbar gelagert ist.

2. Druckgusswerkzeug (1) nach Anspruch 1,
wobei der Pressstempel (32) ringförmig ausgebildet ist.

3. Druckgusswerkzeug (1) nach Anspruch 2,
wobei der Pressstempel (32) flächengleich zur einer zum zweiten Axialende (16) weisenden Stirnfläche eines durch die Metallschmelze gebildeten Kurzschlussrings (22) ausgebildet ist.

4. Druckgusswerkzeug (1) nach einem der Ansprüche 1 bis 3,
aufweisend einen Stempelantrieb zur Verschiebung des Pressstempels (32).

5. Druckgusswerkzeug (1) nach Anspruch 4,
aufweisend einen Controller zur Steuerung des Stempelantriebs.

6. Druckgusswerkzeug (1) nach einem der Ansprüche 1 bis 3,
wobei der Pressstempel (32) Mittel zur kraftübertragungstechnischen Kopplung eines Antriebs einer Druckgussmaschine aufweist.

7. Druckgusswerkzeug (1) nach einem der Ansprüche 1 bis 6,
wobei der zweite Kavitätsringbereich (24) in Axialrichtung unterteilt ist in einen Formgebungsbereich (26) für den zweiten Kurzschlussring (28) und in einen Schmelzereservoirbereich (30), in dem im bestimmungsgemäßen Betrieb des Druckgusswerkzeugs (1) vor einem Verdichtungshub des Pressstempels (32) Metallschmelze vorgehalten wird.

8. Druckgusswerkzeug (1) nach einem der Ansprüche 1 bis 7,
wobei im bestimmungsgemäßen Einsatzzustand das Rotorblechpaket (6) axial unmittelbar an den ersten Kavitätsringbereich (18) anschließt und der zweite Kavitätsringbereich (24) unmittelbar axial an das Rotorblechpaket (6) anschließt, insbesondere wobei die zwei Kavitätsringbereiche (18, 24) durch in dem Rotorblechpaket (6) eingeformte Nuten (36) fluidisch in Verbindung stehen.

9. Druckgusswerkzeug (1) nach einem der Ansprüche 1 bis 8,
wobei der Pressstempel (32) dazu eingerichtet ist, als Auswerfer für den aus dem Rotorblechpaket (6) und der Metallschmelze gebildeten Rotor (2) zu dienen.

10. Druckgusswerkzeug (1) nach einem der Ansprüche 1 bis 8,
aufweisend einen parallel zu dem Pressstempel (32) verschiebbaren Auswerfer, wobei der Auswerfer radial innerhalb des Pressstempels (32) angeordnet und zur Kraftausübung auf das Rotorblechpaket (6) eingerichtet ist oder wobei der Auswerfer eine Mehrzahl von Auswerferstiften (42) aufweist, die durch den Pressstempel (32) hindurch verschiebbar angeordnet sind und zur Kraftausübung auf den zweiten Kurzschlussring (28) eingerichtet sind.

11. Druckgusswerkzeug (1) nach einem der Ansprüche 1 bis 10,
aufweisend eine variotherme Temperierung.

12. Verfahren zur Herstellung eines Rotors (2) für einen Asynchronmotor, wobei verfahrensgemäß
- ein Druckgusswerkzeug (1) gemäß einem der Ansprüche 1 bis 11 bereitgestellt wird,
- ein ringartiges Rotorblechpaket (6) als Einlegeteil in die Kavität (4) des Druckgusswerkzeugs (1) eingelegt wird,
- durch den Anguss (20) von dem ersten Axialende (14) Metallschmelze in die Kavität (4) derart eingebracht wird, dass der erste und der zweite Kavitätsringbereich (18, 24) mit Metallschmelze gefüllt werden,
- der Pressstempel (32) zum Aufbringen eines erhöhten Verdichtungsdruckwerts gegen die Metallschmelze verfahren wird,
- die Metallschmelze auf eine Entformungstemperatur abgekühlt wird, und
- der das Rotorblechpaket (6) und die Kurzschlussringe () aufweisende Rotor (2) aus der Kavität (4) entformt wird.

13. Verfahren nach Anspruch 12,
wobei als Metallschmelze Aluminium, insbesondere Reinaluminium, Kupfer oder Zink, sowie Legierungen dieser Metalle, herangezogen wird.

14. Verfahren nach Anspruch 12 oder 13,
wobei mittels des Pressstempel (32) erst nach einer Verzögerungszeit von ein bis zehn Sekunden, vorzugsweise von zwei bis fünf Sekunden, der erhöhte Verdichtungsdruckwert aufgebracht wird und/oder wobei der erhöhte Verdichtungsdruckwert für eine Dauer 0,1-1,5 Sekunden aufgebracht wird und/oder wobei für den erhöhten Verdichtungsdruckwert Werte von 400 bis 700 bar gewählt werden.
